(19) Europäisches Patentamt / European Patent Office / Office européen des brevets

(11) **EP 3 816 668 A1**

(12) **EUROPEAN PATENT APPLICATION**
published in accordance with Art. 153(4) EPC

(43) Date of publication:
**05.05.2021 Bulletin 2021/18**

(51) Int Cl.:
**G01S 13/93** (2020.01)   **G08G 1/16** (2006.01)

(21) Application number: **19825756.0**

(22) Date of filing: **15.03.2019**

(86) International application number:
**PCT/JP2019/010728**

(87) International publication number:
**WO 2020/003643 (02.01.2020 Gazette 2020/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.06.2018 JP 2018124733**

(71) Applicant: **Sony Corporation**
**108-0075 Tokyo (JP)**

(72) Inventor: **UCHIDA, Shigenori**
**Atsugi-shi, Kanagawa 243-0014 (JP)**

(74) Representative: **Witte, Weller & Partner**
**Patentanwälte mbB**
**Postfach 10 54 62**
**70047 Stuttgart (DE)**

(54) **VEHICLE CONTROL DEVICE AND VEHICLE CONTROL METHOD**

(57) A vehicle is controlled according to a situation in another lane across an adjacent lane adjacent to a traveling lane.

A vehicle control device includes an object detection unit, a relative relationship information calculation unit, and a vehicle control unit. The object detection unit is installed on a vehicle of an own vehicle. The object detection unit detects an object existing in another lane across an adjacent lane adjacent to a traveling lane in which the vehicle of the own vehicle travels. The relative relationship information calculation unit calculates relative relationship information between the vehicle of the own vehicle and the detected object. The vehicle control unit generates a vehicle control signal for controlling the vehicle of the own vehicle on the basis of the calculated relative relationship information.

*FIG. 7*

EP 3 816 668 A1

## Description

TECHNICAL FIELD

The present technology relates to a vehicle control device. More specifically, the present technology relates to a vehicle control device that controls an own vehicle according to the existence states of surrounding vehicles, and a vehicle control method thereof.

BACKGROUND ART

Conventionally, there has been proposed a device including a camera or a radar installed in a vehicle to recognize a surrounding environment so as to provide driving support. For example, there has been proposed a system that selects vehicles behind in the traveling lane of the own vehicle and an adjacent lane as a group of vehicles subject to warning and notifies the driver when any of the vehicles subject to warning is approaching upon starting a lane change operation (see, for example, Patent Document 1).

CITATION LIST

PATENT DOCUMENT

Patent Document 1: Japanese Patent Application Laid-Open No. 2002-372584

SUMMARY OF THE INVENTION

PROBLEMS TO BE SOLVED BY THE INVENTION

In the conventional technique described above, when there is a vehicle approaching upon changing lanes, a notification is given to alert the driver. However, in a case where tracking processing is performed using time-series approach information obtained by a millimeter wave radar, there is a problem that arithmetic processing becomes complicated and time and memory capacity are required for arithmetic. Further, in a case where the surroundings are imaged to detect another vehicle, there is a problem that occlusion due to a vehicle in an adjacent lane occurs in a lane further beyond the adjacent lane, and a traveling vehicle cannot be detected.

The present technology has been created in view of such a situation, and an object thereof is to control a vehicle according to a situation in another lane across an adjacent lane adjacent to a traveling lane.

SOLUTIONS TO PROBLEMS

The present technology has been made to solve the above-mentioned problems, and a first aspect thereof is a vehicle control device including an object detection unit that is installed on a vehicle and detects an object existing in another lane across an adjacent lane adjacent to a traveling lane in which the vehicle travels, a relative relationship information calculation unit that calculates relative relationship information between the vehicle and the object, and a vehicle control unit that generates a vehicle control signal for controlling the vehicle on the basis of the relative relationship information, and is a vehicle control method thereof. Thus, there are provided operations of detecting an object existing in another lane across the adjacent lane and generating the vehicle control signal for controlling the vehicle on the basis of the relative relationship information with the object.

Further, in this first aspect, the object detection unit may be a radar that detects the object by measuring reflected waves of radio waves having a predetermined wavelength. Further, the object detection unit may use radio waves having a millimeter wavelength of 1 millimeter to 10 millimeters as the predetermined wavelength. In particular, for example, there is provided an operation of improving a distance resolution by using a millimeter wave radar in a 76 GHz band.

Further, in this first aspect, the object detection unit may irradiate radio waves of the predetermined wavelength by tilting downward at an angle according to a height from the road surface of the installation position on the vehicle and to a lane interval of the road. Thus, there is provided an operation of reflecting radio waves on a road surface at an appropriate angle to reduce effects of other objects.

Further, in this first aspect, the relative relationship information calculation unit may calculate a relative distance to the object as the relative relationship information. Thus, there is provided an operation of controlling the vehicle on the basis of the relative distance.

Further, in this first aspect, the relative relationship information calculation unit may calculate a relative velocity with respect to the object as the relative relationship information. Thus, there is provided an operation of controlling the vehicle on the basis of the relative velocity.

Further, in this first aspect, the vehicle control unit may generate a control signal for alerting a driver as the vehicle control signal. Thus, there is provided an operation of alerting the driver on the basis of the relative relationship information with the object.

Further, in this first aspect, the vehicle control unit may generate a control signal for alerting surroundings as the vehicle control signal. Thus, there is provided an operation of alerting the surroundings on the basis of the relative relationship information with the object.

Further, in this first aspect, the vehicle control unit may generate a control signal for controlling a driving operation of the vehicle as the vehicle control signal. Thus, there is provided an operation of controlling the driving operation of the vehicle on the basis of the relative relationship information with the object.

Further, in this first aspect, the vehicle control unit may detect a moving direction of the object on the basis of the relative relationship information and may generate the vehicle control signal according to the moving direction that is detected. Thus, there is provided an operation of controlling the vehicle according to the moving direction of the object.

Further, in this first aspect, an operation prediction unit that detects a lane change operation in the vehicle in advance may be further provided, in which the vehicle control unit may generate the vehicle control signal in response to the lane change operation that is detected. Thus, there is provided an operation of controlling the vehicle in response to the lane change operation that is detected.

EFFECTS OF THE INVENTION

According to the present technology, it is possible to have an excellent effect that a vehicle can be controlled according to a situation in another lane across an adjacent lane adjacent to a traveling lane. Note that the effect described here is not necessarily limited, and may be any effect described in the present disclosure.

BRIEF DESCRIPTION OF DRAWINGS

Fig. 1 is a view of a vehicle rear surface illustrating an example of a relationship between lanes and vehicles assumed in an embodiment of the present technology.
Fig. 2 is an overhead view illustrating an example of a relationship between lanes and vehicles assumed in the embodiment of the present technology.
Fig. 3 is a view illustrating an example of installation of a millimeter wave radar 100 in a vehicle of an own vehicle 10 in the embodiment of the present technology.
Fig. 4 is a diagram illustrating a configuration example of the millimeter wave radar 100 in the embodiment of the present technology.
Fig. 5 is a diagram illustrating an installation angle of the millimeter wave radar 100 in the vehicle of the own vehicle 10 in the embodiment of the present technology.
Fig. 6 is a diagram illustrating a specific example of the relationship between an installation height h of the millimeter wave radar 100 and an irradiation angle θ of millimeter waves in the embodiment of the present technology.
Fig. 7 is a diagram illustrating an example of a mode in a case where distances of positions of target objects are measured by the millimeter wave radar 100 of the embodiment of the present technology.
Fig. 8 is a diagram illustrating an example of a distance map of the positions of the target objects measured by the millimeter wave radar 100 of the embodiment of the present technology.
Fig. 9 is a diagram illustrating another example of a distance map of the positions of the target objects measured by the millimeter wave radar 100 of the embodiment of the present technology.
Fig. 10 is a diagram illustrating an example of a mode in a case where velocity of a target object is measured by the millimeter wave radar 100 of the embodiment of the present technology.
Fig. 11 is a diagram illustrating an example of a velocity map of a target object measured by the millimeter wave radar 100 of the embodiment of the present technology.
Fig. 12 is a diagram illustrating a functional configuration example of a vehicle control device using the millimeter wave radar 100 of the embodiment of the present technology.
Fig. 13 is a diagram illustrating an example of a processing procedure of the vehicle control device using the millimeter wave radar 100 of the embodiment of the present technology.

MODE FOR CARRYING OUT THE INVENTION

Hereinafter, modes for carrying out the present technology (hereinafter referred to as an embodiment) will be described. The description will be given in the following order.

1. Lanes and vehicles
2. Millimeter wave radar
3. Vehicle control device

<1. Lanes and vehicles>

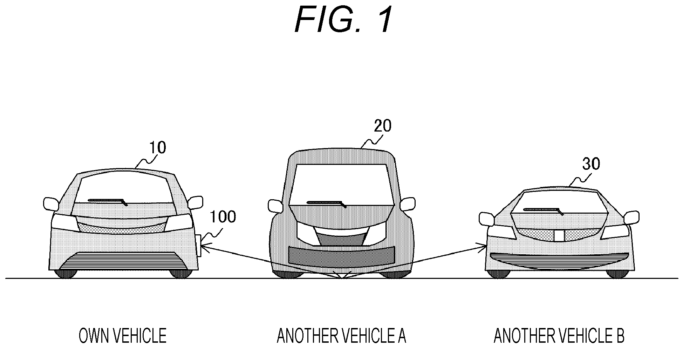

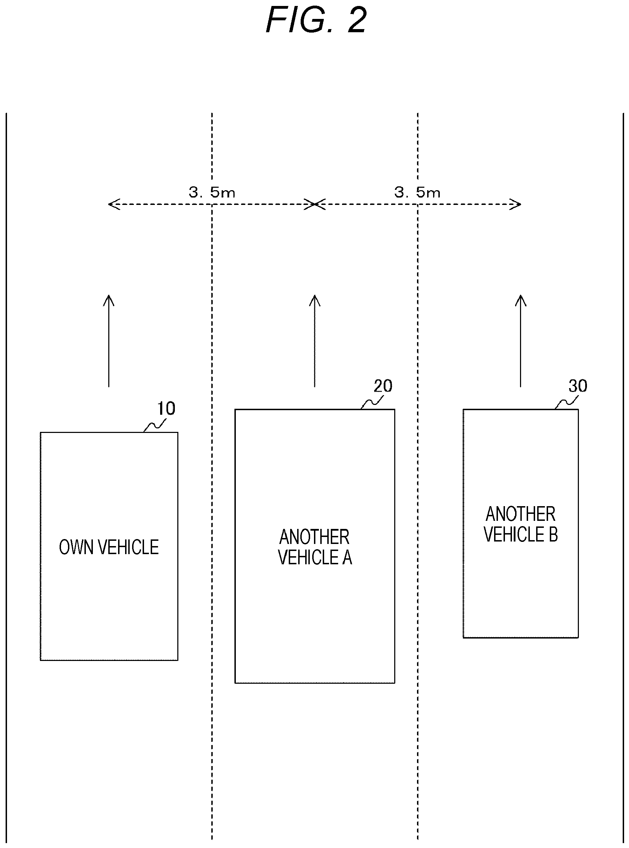

Figs. 1 and 2 are views illustrating an example of a relationship between lanes and vehicles assumed in the embodiment of the present technology. In Fig. 2, a traveling direction of the vehicles is illustrated upward. In Fig. 1, the traveling direction of the vehicles is illustrated in a depth direction. That is, Fig. 1 illustrates states behind the vehicles.

In this embodiment, a road with three or more lanes is assumed, and here, a situation where the own vehicle 10 is in the left lane of three lanes, another vehicle A 20 is in the center lane, and another vehicle B 30 is in the right lane. In this example, the width of each lane is assumed to be 3.5 meters. Therefore, the lane arrangement pitch is also 3.5 meters. Note that while it is 3.5 meters in a case of Japan, it is 3.66 meters in the United States and it is 3.75 meters in Germany, which can be changed as appropriate according to the conditions of each country.

Here, it is assumed a case where the own vehicle 10 overtakes the another vehicle A 20 in the center lane and attempts to change lanes to the center lane. At that time, when the another vehicle B 30 similarly changes lanes from the right lane to the center lane, the own vehicle 10 and the another vehicle B 30 may collide in the center lane. That is, even when the driver visually confirms, if the another vehicle A 20 in the center lane is running in parallel, there is a risk that the own vehicle 10 and the another vehicle B 30 change lane without noticing each other's existence because of being hidden by the another vehicle A 20.

Accordingly, in this embodiment, as illustrated in Fig. 1, a millimeter wave radar 100 is installed in a lower part of a vehicle side surface of the own vehicle 10 and irradiates the millimeter waves toward a side of a vehicle. At this time, by installing the millimeter wave radar 100 by tilting toward a road surface side, the millimeter waves are reflected on the road surface in the center lane. Thus, the another vehicle B 30 in the right lane, which is a blind spot due to the another vehicle A 20 in the center lane, is detected.

<2. Millimeter wave radar>

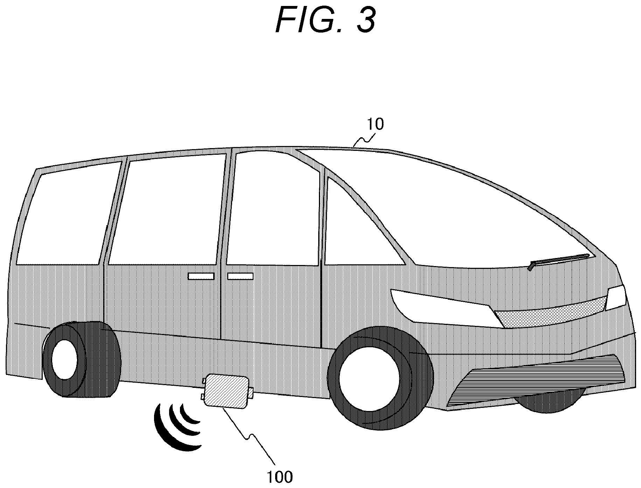

Fig. 3 is a view illustrating an example of installation of the millimeter wave radar 100 in the vehicle of the own vehicle 10 in the embodiment of the present technology.

As illustrated in the diagram, the millimeter wave radar 100 is installed by tilting downward in the lower part of the side surface of the vehicle of the own vehicle 10 so that the irradiation direction of the millimeter waves is toward the road surface side of the center lane. The millimeter wave radar 100 is a radar (RADAR: RAdio Detection And Ranging) that irradiates radio waves (millimeter waves) with a millimeter wavelength of 1 millimeter to 10 millimeters and measures reflected waves to detect objects.

The millimeter wave radar 100 has a function of detecting the distance, velocity (distance and direction) at which an object is located, and an arrival angle of reflected waves. The capability of detecting velocity with the millimeter wave radar 100 is an advantageous feature not found in other sensors such as a light sensor (LiDAR: Light Detection And Ranging). While processing such as data separation and grouping is required to remove noise in a case where detected data is a distance, the data obtained as velocity does not require such processing and thus has an advantage of easiness of handling.

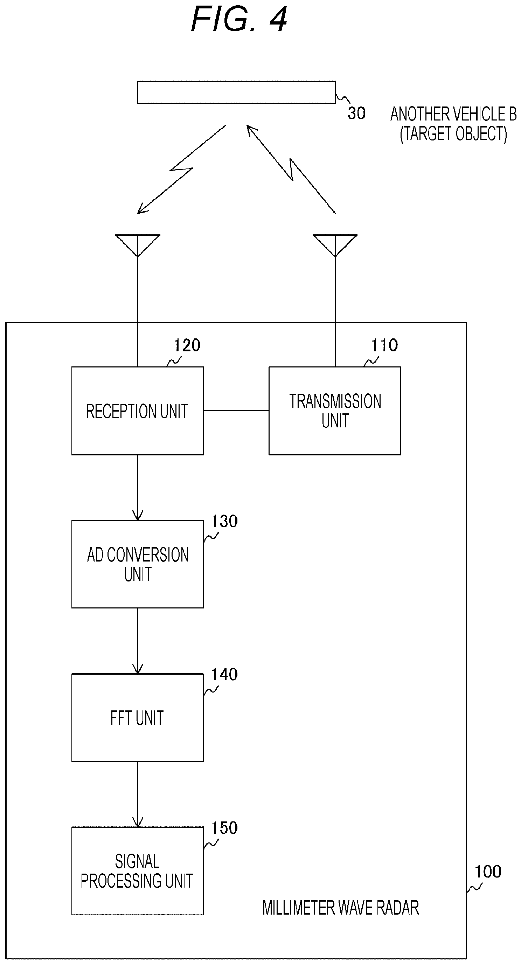

Fig. 4 is a diagram illustrating a configuration example of the millimeter wave radar 100 in the embodiment of the present technology. This millimeter wave radar 100 includes a transmission unit 110, a reception unit 120, an AD conversion unit 130, an FFT unit 140, and a signal processing unit 150. A transmission antenna and a reception antenna are connected to the transmission unit 110 and the reception unit 120, respectively. However, these transmission antenna and reception antenna may be combined.

The transmission unit 110 is a high frequency circuit (RF front end) that transmits millimeter waves to a target object (another vehicle B 30). The millimeter wave transmitted from the transmission unit 110 is a chirp wave whose frequency changes over time.

The reception unit 120 is a high-frequency circuit that receives millimeter waves reflected by a target object (another vehicle B 30). The reception unit 120 demodulates the received millimeter waves into a baseband signal and supplies the baseband signal to the AD conversion unit 130. The AD conversion unit 130 performs analog-to-digital (AD) conversion of an analog baseband signal received by the reception unit 120 into a digital signal.

The fast Fourier transform (FFT) unit 140 is a fast Fourier transform unit that calculates the distance at which the target object is located, velocity, and an arrival angle of the reflected waves on the basis of the digital signal converted by the AD conversion unit 130. This FFT unit 140 detects a beat frequency generated by adding the reflected wave and an original chirp wave, and calculates the distance of the target object and the like.

The signal processing unit 150 performs detection processing, tracking processing, and the like of the target object on the basis of the signal obtained by the fast Fourier transform by the FFT unit 140.

[Installation position and angle of millimeter wave radar]

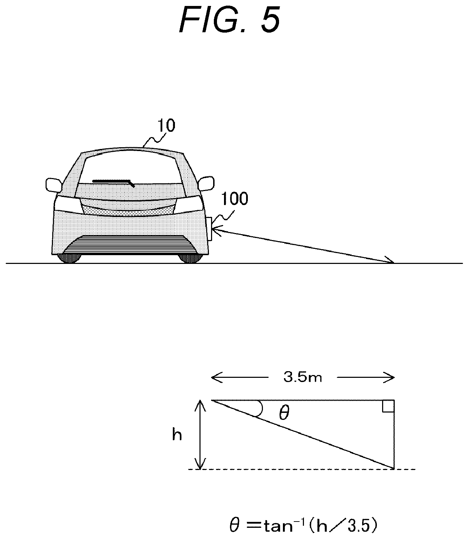

Fig. 5 is a diagram illustrating an installation angle of the millimeter wave radar 100 in the vehicle of the own vehicle 10 in the embodiment of the present technology.

As described above, the millimeter wave radar 100 is installed by tilting downward in the lower part of the side surface of the vehicle of the own vehicle 10 so that the irradiation direction of the millimeter waves is toward the road surface side of the center lane. Here, an angle formed by the irradiation direction of the millimeter waves with the horizontal direction is 9[°]. Further, h is the height of an installation position of the millimeter wave radar 100 from the road surface. Further, W is the pitch of the lane. As mentioned above, the lane pitch is assumed to be 3.5 meters, but it can be changed as appropriate depending on road conditions in each country. Thus, the angle θ is obtained by the following equation.

$$\theta = \tan^{-1}(h/W)$$

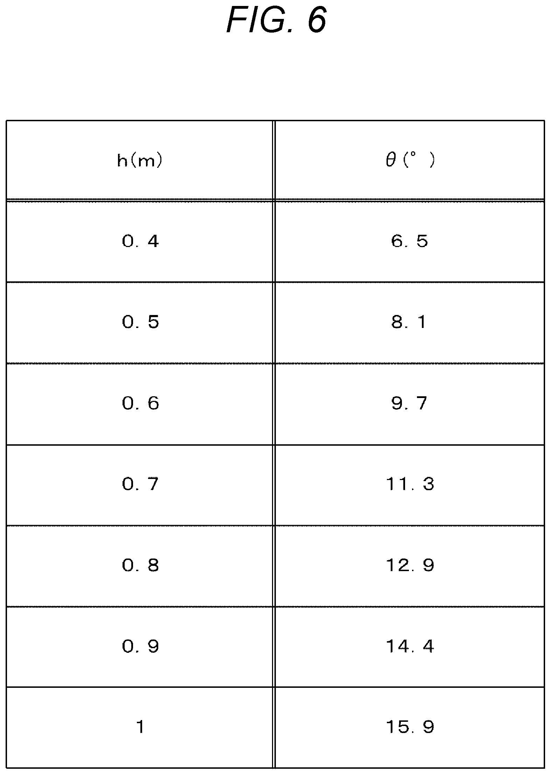

Fig. 6 illustrates values obtained by substituting specific values into the above equation. Fig. 6 is a diagram illustrating a specific example of the relationship between the installation height h of the millimeter wave radar 100 and the irradiation angle θ of the millimeter waves in the embodiment of the present technology.

From the diagram, a desired angle when the millimeter wave radar 100 is tilted downward to obtain the reflection from the road surface is obtained. For example, if the height h from the road surface at the installation position of the millimeter wave radar 100 is 0.5 meter, the angle θ can be obtained. That is, in this case, it can be seen that a good response can be obtained by installing the millimeter wave radar 100 by tilting so that the irradiation angle of the millimeter waves is approximately 8° downward.

[Distance accuracy of millimeter wave radar]

In general, a distance resolution ΔR in a radar is obtained by the following equation.

$$\Delta R = c/2B$$

Here, c denotes velocity of light ($3 \times 10^8$ m/s) and B denotes band (/s).
For a radar in the 24 GHz band, for example, a band of about 200 MHz is assumed. The distance resolution in this case is 75 cm. On the other hand, a millimeter wave radar in a 76 GHz band can secure a band of 1 GHz. The distance resolution in this case is 15 cm. As described above, it can be seen that the millimeter wave radar in the 76 GHz band can improve accuracy in the distance direction more than by the radar in the 24 GHz band, and can be expected to improve vehicle detection accuracy in radar response.

[Acquisition of distance by millimeter wave radar]

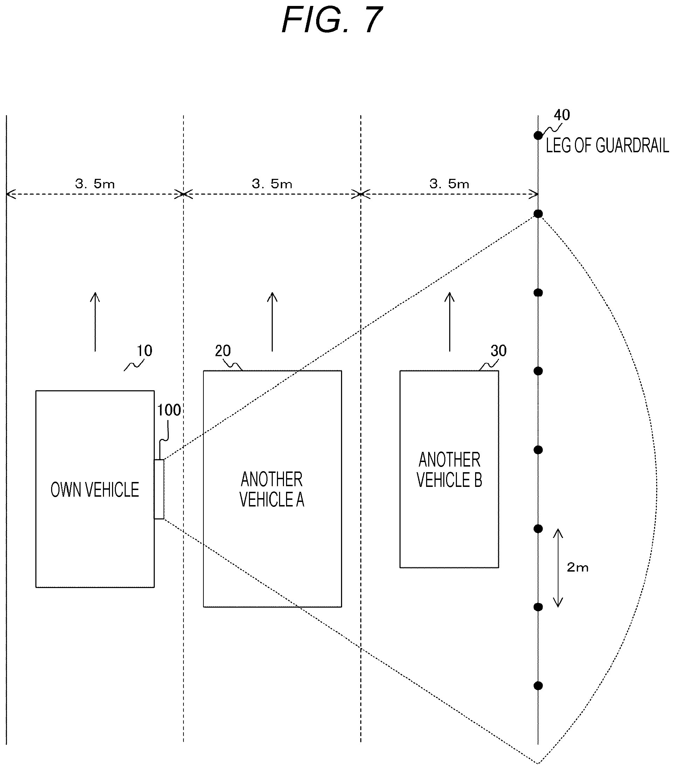

Fig. 7 is a diagram illustrating an example of a mode in a case where distances of positions of target objects are measured by the millimeter wave radar 100 of the embodiment of the present technology.
In this example, in the situation where the own vehicle 10 is in the left lane of the three lanes, the another vehicle A 20 is in the center lane, and the another vehicle B 30 is in the right lane, the distances of the positions of the target objects are measured by the millimeter wave radar 100 installed on a right side surface of the vehicle of the own vehicle 10. A guardrail is installed on the right side of the right lane, and is fixed to the ground by legs 40 arranged at equal intervals.

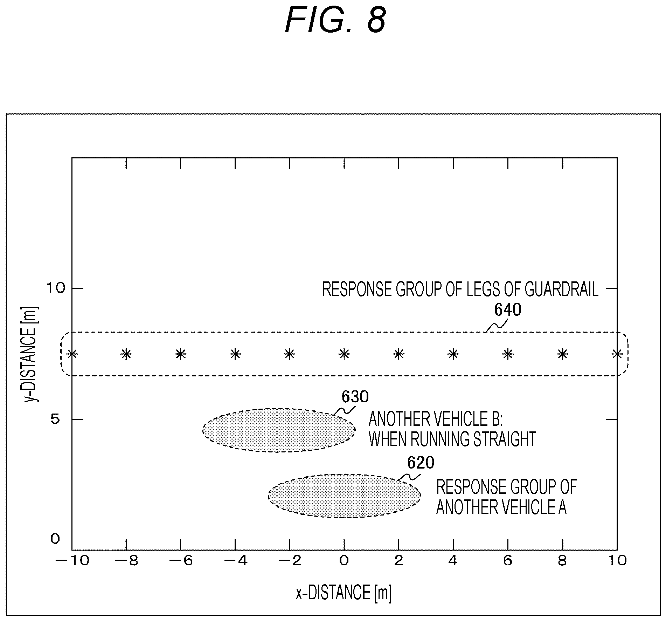

Fig. 8 is a diagram illustrating an example of a distance map of the positions of the target objects measured by the millimeter wave radar 100 of the embodiment of the present technology.
In this distance map, the horizontal axis x represents a distance (meters) in the traveling direction, and the vertical axis y represents a distance (meters) from the right side surface of the own vehicle 10. As the distance on the x-axis, assuming that the current position is "0", a relative distance is illustrated so that a negative value increases in the traveling direction and a positive value increases in an opposite direction of traveling. Further, as the distance on the y-axis, assuming that a straight line along the traveling direction from the right side surface of the own vehicle 10 is "0", a relative distance from the straight line is illustrated.
Here, a response group 620 represents responses of the another vehicle A 20. Further, a response group 630 represents responses of the another vehicle B 30. Furthermore, a response group 640 represents responses of the legs 40 of the guardrail.
With this distance map, it is possible to know the relative distance (relative position) to the own vehicle 10 for each of the target objects. That is, it can be grasped that the another vehicle A 20 is traveling in the center lane, the another vehicle B 30 is traveling in the right lane, and the guardrail is installed on the right side of the right lane.

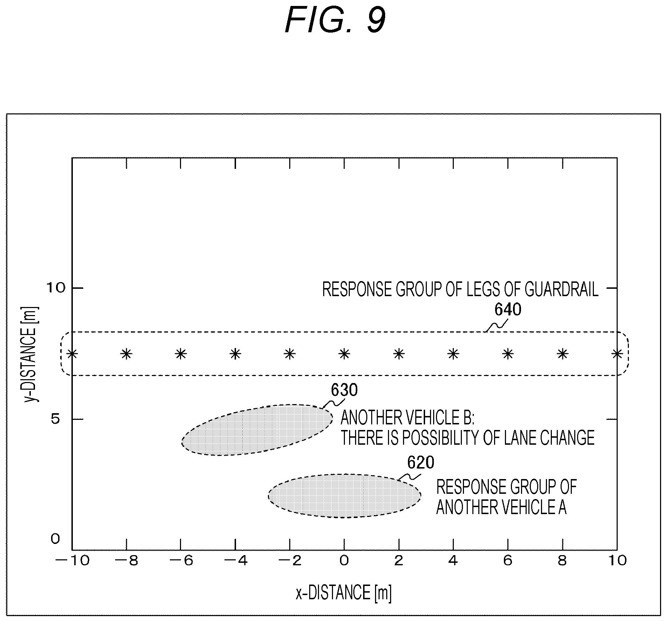

Fig. 9 is a diagram illustrating another example of a distance map of the positions of the target objects measured by the millimeter wave radar 100 of the embodiment of the present technology.
Similarly to the above example, this distance map illustrates the response groups 620, 630, and 640 in a space in which the horizontal axis x represents a distance in the traveling direction and the vertical axis y represents a distance from the right side surface of the own vehicle 10. In the above example, the response group 630 of the another vehicle B 30 has a shape along the running direction and represents straight running, but in this example, it has a shape inclined toward the center lane and the lane is changed, and thus it can be seen that there is a possibility of a lane change.
That is, with this distance map, it is possible not only to detect the another vehicle B 30 existing in the right lane across the center lane, but also to be useful for predicting the movement of the another vehicle B 30. Thus, it is possible to prevent the own vehicle 10 from colliding with the another vehicle B 30 in the center lane in advance.

[Acquisition of velocity by millimeter wave radar]

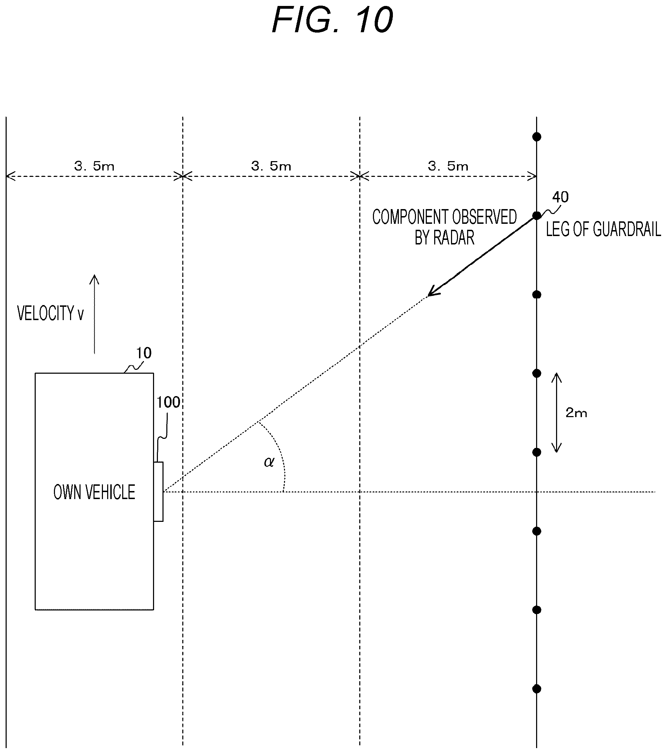

Fig. 10 is a diagram illustrating an example of a mode in a case where velocity of a target object is measured by the millimeter wave radar 100 of the embodiment of the present technology.
In this example, the velocity of a surrounding object is measured in a situation where the own vehicle 10 is traveling in the left lane of the three lanes. In the diagram, the another vehicle A 20 and the another vehicle B 30 are omitted for convenience of description, but it is assumed that these are also running in parallel similarly to the above example.
Here, it is assumed that the velocity component observed by the millimeter wave radar 100 is v, focusing on a leg 40 of the guardrail. At that time, assuming that the leg 40 of the guardrail exists at a position of an angle α from the vertical direction of the millimeter wave radar 100, the velocity component relative to the leg 40 of the guardrail is "v·sinα".

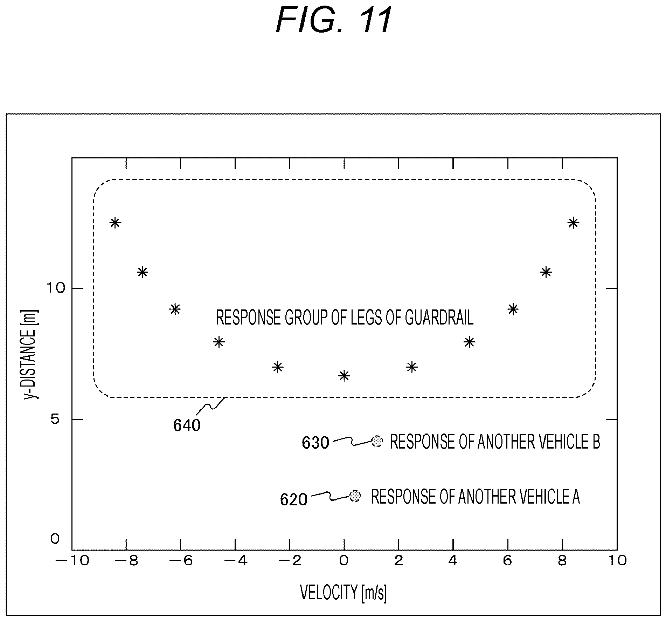

Fig. 11 is a diagram illustrating an example of a velocity map of a target object measured by the millimeter wave radar 100 of the embodiment of the present technology.

In this velocity map, the horizontal axis x represents the velocity (meters/second) of the target object, and the vertical axis y represents the distance (meters) from the right side surface of the own vehicle 10. The x-axis represents a relative velocity assuming that the velocity of the own vehicle 10 is "0". Further, as the distance on the y-axis, assuming that a straight line along the traveling direction from the right side surface of the own vehicle 10 is "0", a relative distance from the straight line is illustrated.

Here, a response 620 represents responses of the another vehicle A 20. Further, a response 630 represents responses of the another vehicle B 30. Furthermore, a response group 640 represents responses of the legs 40 of the guardrail.

As is clear from the diagram, the responses of the another vehicle A 20 and the another vehicle B 30 are illustrated as a response group having a width over time in the distance map described above, but are clearly illustrated as the velocity at a certain point in this velocity map. In the distance map, processing such as separation and grouping is required to remove noise, but this velocity map can quickly identify the velocity of a target object. Note that as described above, since the velocity component observed by the millimeter wave radar 100 is affected by the angle $\alpha$, the response group 640 of the leg 40 of the guardrail has an intermittent arc shape.

<3. Vehicle control device>

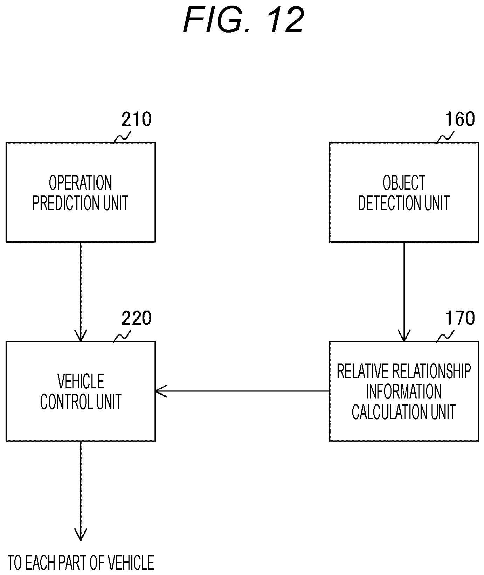

Fig. 12 is a diagram illustrating a functional configuration example of a vehicle control device using the millimeter wave radar 100 of the embodiment of the present technology.

The vehicle control device includes an object detection unit 160, a relative relationship information calculation unit 170, an operation prediction unit 210, and a vehicle control unit 220.

The object detection unit 160 detects an object existing in another lane (right lane) across an adjacent lane (center lane) adjacent to the traveling lane (left lane) in which the vehicle of the own vehicle 10 travels. The object detection unit 160 corresponds to one function of the millimeter wave radar 100 installed on the vehicle of the own vehicle 10.

The relative relationship information calculation unit 170 calculates relative relationship information between the vehicle of the own vehicle 10 and an object existing in another lane. Here, the relative relationship information is information regarding a distance to an object, velocity of the object, and the like as described above. This relative relationship information calculation unit 170 may be a function of the millimeter wave radar 100, or may be a function of the own vehicle 10.

The operation prediction unit 210 detects (predicts) in advance a lane change operation in the vehicle of the own vehicle 10. For example, when the driver operates a blinker (direction indicator) in the own vehicle 10, and/or when the direction of the vehicle body of the own vehicle 10 is inclined toward another lane, it can be predicted that the driver has an intention to change lanes. Further, the eyes of the driver may be monitored in the own vehicle 10 to estimate an intention to change lanes when moving of the line of sight thereof toward another lane, or the like occurs. Furthermore, the own vehicle 10 may monitor the front and presume that a lane change will be performed when the distance to the vehicle in front becomes short.

The vehicle control unit 220 generates a vehicle control signal for controlling the vehicle of the own vehicle 10 on the basis of the relative relationship information calculated by the relative relationship information calculation unit 170. In a case where this operation prediction unit 210 predicts that the driver has an intention to change lanes, the vehicle control unit 220 determines a danger after changing lanes on the basis of the relative relationship information. Then, if a danger is detected, a vehicle control signal for avoiding the danger is generated and supplied to each part of the vehicle through a controller area network (CAN) bus or the like.

For example, it is conceivable to output sound from a speaker to give a warning such as "there is a car in another lane". Further, in a case where a head-up display or the like is used, it is conceivable to give a warning by characters. Further, the steering wheel may be vibrated to alert the driver. Further, the steering may be controlled by the vehicle control signal to return to the original lane. Moreover, it is also conceivable to turn on headlights to clarify the intention of the own vehicle 10 to enter another lane to notify the another vehicle of the existence of the own vehicle 10.

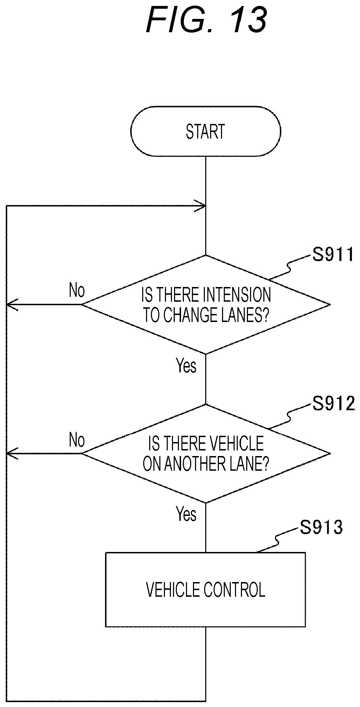

Fig. 13 is a diagram illustrating an example of a processing procedure of the vehicle control device using the millimeter wave radar 100 of the embodiment of the present technology.

When the operation prediction unit 210 predicts the intention of the driver to change lanes (Yes in step S911), the vehicle control unit 220 determines a danger after changing lanes on the basis of the relative relationship information calculated by the relative relationship information calculation unit 170 (step S912). That is, if the another vehicle B 30 in the right lane is also trying to change lanes to the center lane where the own vehicle 10 is trying to change lanes (Yes in step S912), the vehicle control unit 220 generates a vehicle control signal for avoiding the danger and supplies the vehicle control signal to each part of the vehicle (step S913). Thus, the vehicle control as described above is performed.

Note that in this example, after predicting the intention to change lanes (step S911), the danger after changing lanes is determined (step S912), but since the operation prediction unit 210 and the relative relationship information calculation unit 170 can operate independently, the order may be reversed.

As described above, according to the embodiment of the present technology, by installing the millimeter wave radar 100 in the lower part of the vehicle side surface by tilting toward the road surface side, an object in another lane across the adjacent lane adjacent to the traveling lane can be detected. Then, the vehicle can be controlled on the basis of the relative relationship information with the object.

Note that the embodiment described above illustrates an example for embodying the present technology, and matters in the embodiment and matters specifying the invention in the claims have respective correspondence relationships. Similarly, the matters specifying the invention in the claims and matters having the same names in the embodiment of the present technology have respective correspondence relationships. However, the present technology is not limited to the embodiment and can be embodied by making various modifications to the embodiment without departing from the gist thereof.

Further, the processing procedures described in the embodiment described above may be regarded as a method having a series of these procedures, and may be furthermore regarded as a program for causing a computer to execute these series of procedures or a recording medium for storing the program. As this recording medium, for example, a Compact Disc (CD), a MiniDisc (MD), a Digital Versatile Disc (DVD), a memory card, a Blu-ray disc (Blu-ray (registered trademark) Disc), or the like can be used.

Note that effects described in the present description are merely examples and are not limited, and other effects may be provided.

Note that the present technology can have configurations as follows.

(1) A vehicle control device including:

an object detection unit that is installed on a vehicle and detects an object existing in another lane across an adjacent lane adjacent to a traveling lane in which the vehicle travels;
a relative relationship information calculation unit that calculates relative relationship information between the vehicle and the object; and
a vehicle control unit that generates a vehicle control signal for controlling the vehicle on the basis of the relative relationship information.

(2) The vehicle control device according to (1) above, in which
the object detection unit is a radar that detects the object by measuring reflected waves of radio waves having a predetermined wavelength.
(3) The vehicle control device according to (2) above, in which
the object detection unit uses radio waves having a millimeter wavelength of 1 millimeter to 10 millimeters as the predetermined wavelength.
(4) The vehicle control device according to (2) above, in which
the object detection unit irradiates radio waves of the predetermined wavelength by tilting downward at an angle according to a height from the road surface of the installation position on the vehicle and to a lane interval of the road.
(5) The vehicle control device according to any one of (1) to (4) above, in which
the relative relationship information calculation unit calculates a relative distance to the object as the relative relationship information.
(6) The vehicle control device according to any one of (1) to (4) above, in which
the relative relationship information calculation unit calculates a relative velocity with respect to the object as the relative relationship information.
(7) The vehicle control device according to any one of (1) to (6) above, in which
the vehicle control unit generates a control signal for alerting a driver as the vehicle control signal.
(8) The vehicle control device according to any one of (1) to (6) above, in which
the vehicle control unit generates a control signal for alerting surroundings as the vehicle control signal.
(9) The vehicle control device according to any one of (1) to (6) above, in which
the vehicle control unit generates a control signal for controlling a driving operation of the vehicle as the vehicle control signal.
(10) The vehicle control device according to any one of (1) to (6) above, in which
the vehicle control unit detects a moving direction of the object on the basis of the relative relationship information and generates the vehicle control signal according to the moving direction that is detected.
(11) The vehicle control device according to any one of (1) to (10) above, further including an operation prediction unit that detects a lane change operation in the vehicle in advance,
in which the vehicle control unit generates the vehicle control signal in response to the lane change operation that is detected.
(12) A vehicle control method including:

a procedure in which an object detection unit detects an object existing in another lane across an adjacent lane adjacent to a traveling lane in which the vehicle travels;
a procedure in which a relative relationship information calculation unit calculates relative relationship information between the vehicle and the object; and
a procedure in which a vehicle control unit generates a vehicle control signal for controlling the vehicle on the basis of the relative relationship information.

REFERENCE SIGNS LIST

| 10 | Own vehicle |
| 20 | Another vehicle A |
| 30 | Another vehicle B |
| 40 | Leg of guardrail |
| 100 | Millimeter wave radar |
| 110 | Transmission unit |
| 120 | Reception unit |
| 130 | AD conversion unit |
| 140 | FFT unit |
| 150 | Signal processing unit |
| 160 | Object detection unit |
| 170 | Relative relationship information calculation unit |
| 210 | Operation prediction unit |
| 220 | Vehicle control unit |
| 2420 | Outside-vehicle information detection unit |

**Claims**

1.  A vehicle control device comprising:

    an object detection unit that is installed on a vehicle and detects an object existing in another lane across an adjacent lane adjacent to a traveling lane in which the vehicle travels;
    a relative relationship information calculation unit that calculates relative relationship information between the vehicle and the object; and
    a vehicle control unit that generates a vehicle control signal for controlling the vehicle on a basis of the relative relationship information.

2.  The vehicle control device according to claim 1, wherein
    the object detection unit is a radar that detects the object by measuring reflected waves of radio waves having a predetermined wavelength.

3.  The vehicle control device according to claim 2, wherein
    the object detection unit uses radio waves having a millimeter wavelength of 1 millimeter to 10 millimeters as the predetermined wavelength.

4.  The vehicle control device according to claim 2, wherein
    the object detection unit irradiates radio waves of the predetermined wavelength by tilting downward at an angle according to a height from the road surface of the installation position on the vehicle and to a lane interval of the road.

5.  The vehicle control device according to claim 1, wherein

the relative relationship information calculation unit calculates a relative distance to the object as the relative relationship information.

6.  The vehicle control device according to claim 1, wherein
    the relative relationship information calculation unit calculates a relative velocity with respect to the object as the relative relationship information.

7.  The vehicle control device according to claim 1, wherein
    the vehicle control unit generates a control signal for alerting a driver as the vehicle control signal.

8.  The vehicle control device according to claim 1, wherein
    the vehicle control unit generates a control signal for alerting surroundings as the vehicle control signal.

9.  The vehicle control device according to claim 1, wherein
    the vehicle control unit generates a control signal for controlling a driving operation of the vehicle as the vehicle control signal.

10.  The vehicle control device according to claim 1, wherein
    the vehicle control unit detects a moving direction of the object on a basis of the relative relationship information and generates the vehicle control signal according to the moving direction that is detected.

11.  The vehicle control device according to claim 1, further comprising an operation prediction unit that detects a lane change operation in the vehicle in advance,
    wherein the vehicle control unit generates the vehicle control signal in response to the lane change operation that is detected.

12.  A vehicle control method comprising:

    a procedure in which an object detection unit detects an object existing in another lane across an adjacent lane adjacent to a traveling lane in which the vehicle travels;
    a procedure in which a relative relationship information calculation unit calculates relative relationship information between the vehicle and the object; and
    a procedure in which a vehicle control unit generates a vehicle control signal for controlling the vehicle on a basis of the relative relationship information.

# FIG. 1

OWN VEHICLE      ANOTHER VEHICLE A      ANOTHER VEHICLE B

# FIG. 2

3. 5m      3. 5m

20

30

10

OWN VEHICLE

ANOTHER
VEHICLE A

ANOTHER
VEHICLE B

# FIG. 3

# FIG. 4

30 ANOTHER VEHICLE B
(TARGET OBJECT)

120

RECEPTION UNIT

110

TRANSMISSION
UNIT

130

AD CONVERSION
UNIT

140

FFT UNIT

150

SIGNAL
PROCESSING UNIT

100

MILLIMETER WAVE RADAR

# FIG. 5

$$\theta = \tan^{-1}(h \diagup 3.5)$$

# FIG. 6

| h(m) | $\theta$ (°) |
|------|------|
| 0. 4 | 6. 5 |
| 0. 5 | 8. 1 |
| 0. 6 | 9. 7 |
| 0. 7 | 11. 3 |
| 0. 8 | 12. 9 |
| 0. 9 | 14. 4 |
| 1 | 15. 9 |

# FIG. 7

# FIG. 8

# FIG. 9

# FIG. 10

# FIG. 11

# FIG. 12

```
        210                                  160
    ┌──────────────┐                    ┌──────────────┐
    │  OPERATION   │                    │    OBJECT    │
    │PREDICTION UNIT│                   │DETECTION UNIT│
    └──────┬───────┘                    └──────┬───────┘
           │                                   │
           │                                   │
        220│                                170│
           ▼                                   ▼
    ┌──────────────┐                 ┌───────────────────────┐
    │              │                 │ RELATIVE RELATIONSHIP │
    │   VEHICLE    │◄────────────────│     INFORMATION       │
    │ CONTROL UNIT │                 │   CALCULATION UNIT    │
    └──────┬───────┘                 └───────────────────────┘
           │
           ▼
  TO EACH PART OF VEHICLE
```

# FIG. 13

```
          ┌──────────┐
          │  START   │
          └────┬─────┘
               │
               ▼
          ╱─────────╲          ─S911
   No    ╱ IS THERE   ╲
◄───────╱  INTENSION   ╲
        ╲ TO CHANGE LANES?╱
         ╲───────────╱
               │ Yes
               ▼
          ╱─────────╲          ─S912
   No    ╱ IS THERE   ╲
◄───────╱   VEHICLE     ╲
        ╲ ON ANOTHER LANE?╱
         ╲───────────╱
               │ Yes
               ▼                ─S913
        ┌─────────────────┐
        │  VEHICLE CONTROL │
        └─────────────────┘
```

## INTERNATIONAL SEARCH REPORT

International application No.

PCT/JP2019/010728

### A. CLASSIFICATION OF SUBJECT MATTER
Int. Cl. G01S13/93(2006.01)i, G08G1/16(2006.01)i

According to International Patent Classification (IPC) or to both national classification and IPC

### B. FIELDS SEARCHED

Minimum documentation searched (classification system followed by classification symbols)
Int. Cl. G01S7/00-7/42, 13/00-13/95, G08G1/16

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2014-241115 A (TOYOTA MOTOR CORP.) 25 December 2014, paragraphs [0002], [0008], [0012], [0013], [0020], [0025]-[0028], [0113]-[0116], fig. 28, 29 (Family: none) | 1-2, 5-7, 9-10, 12 |
| Y | | 3-4, 8, 11 |
| Y | JP 2006-349456 A (DENSO CORP.) 28 December 2006, paragraphs [0002], [0012]-[0014], [0028], [0029], [0034], [0040], [0041], [0052]-[0069], fig. 7 & US 2006/0284760 A1, paragraphs [0005], [0029], [0030], [0035], [0042], [0051]-[0074], fig. 7 | 3-4, 11 |
| Y | JP 2010-181257 A (NISSAN MOTOR CO., LTD.) 19 August 2010, paragraphs [0004], [0005], [0012], [0019], [0027], [0033], [0037], [0070]-[0082], fig. 5, 19 (Family: none) | 3-4, 11 |

☒ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 16.04.2019 | 07.05.2019 |

| Name and mailing address of the ISA/<br>    Japan Patent Office<br>    3-4-3, Kasumigaseki, Chiyoda-ku,<br>    Tokyo 100-8915, Japan | Authorized officer |
|---|---|
| | Telephone No. |

Form PCT/ISA/210 (second sheet) (January 2015)

**INTERNATIONAL SEARCH REPORT**

| International application No. |
| --- |
| PCT/JP2019/010728 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 60-24479 A (FUJITSU TEN LTD.) 07 February 1985, page 3, upper left column, to upper right column (Family: none) | 8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2002372584 A